# EUROPÄISCHE PATENTANMELDUNG

(11) **EP 2 409 938 A2**
(43) Veröffentlichungstag der Anmeldung: **25.01.2012**
(21) Anmeldenummer: 11174435.5
(22) Anmeldetag: 19.07.2011
(51) Int. Cl.: B65H 31/30

(54) **Unterdruckfördereinrichtung**

(30) Priorität: 19.07.2010 DE 102010032334
(71) Anmelder: Palamides GmbH, 71272 Renningen (DE)
(72) Erfinder: Gasser, Marcus, 74321 Bietigheim-Bissingen (DE); Pfeiffer, Wolfgang, 70567 Stuttgart (DE); Hirsch, Mario, 75365 Calw (DE)
(74) Vertreter: Witte, Weller & Partner

(57) **Zusammenfassung**

Eine Vorrichtung (10) dient zum Transportieren von flächigen Produkten (28), die zumindest über einen Abschnitt eine Kante (32) aufweisen. Es ist eine Unterdruckeinheit (12) vorgesehen, die an einer Unterseite eine längs verlaufende Ansaugöffnung aufweist, durch die Luft über eine Unterdruckquelle (17) ansaugbar ist. Eine Reihe an zu transportierenden flächigen Produkten (28) kann über deren Kante (32), quer zur längs verlaufenden Ansaugöffnung erstreckend, an die Unterseite angehängt werden. (Fig. 1)

## Beschreibung

Die vorliegende Erfindung betrifft eine Vorrichtung zum Transportieren von flächigen Produkten, die zumindest über einen Abschnitt eine Kante aufweisen.

Unter flächigen Produkten, die zumindest eine über einen Abschnitt verlaufende Kante aufweisen, kann man beispielsweise Druckereierzeugnisse, Kartons, Zuschnitte, Faltschachteln, Platten, Zeitungen, Prospekte, Verpackungen, Briefkuverts etc. verstehen. All diesen Produkten ist gemein, dass sie flächig ausgebildet sind, wobei flächig hier nicht unbedingt eben bedeutet, sie können auch gebogen oder wellig verlaufen, sie müssen aber eine über einen gewissen Abschnitt definiert verlaufende Kante aufweisen. Derartige Erzeugnisse werden meist von einer vorangegangenen Station, beispielsweise einer Druckvorrichtung, einer Falzvorrichtung einer Stanzvorrichtung oder in Fällen von Briefkuverts einer Kuvertieranlage, als ein Strom von Produkten ausgegeben.

Zur weiteren Handhabung soll dieser Strom in einzelne Einheiten unterteilt werden und diese Einheiten zum Beispiel in ein Behältnis oder dergleichen übergeführt werden.

Es können auch Banderolier- oder Verpackungsvorgänge anschließend stattfinden, entscheidend ist, dass eine bestimmte Menge bzw. Chargengröße bewegt werden muss.

Im Falle von Briefkuverts werden diese anhand bestimmter Daten, wie zum Beispiel Postleitzahlenbereiche, bis dato noch von Hand aus einem kontinuierlichen Strom aussortiert und in entsprechende Transportbehälter überführt.

Bei anderen Erzeugnissen, beispielsweise Faltschachteln, werden Zuschnitte nach dem Ausstanzen durch Verkleben schon in eine Vorform gebracht, die aber noch flächig und nicht dreidimensional ist.

Diese Zuschnitte werden dann beispielsweise in Chargengrößen von mehreren hundert Stück an einen Befüller überbracht.

Nimmt man als Beispiel eine Zahnpastaverpackung, so wird diese Schachtel als Stanzblatt hergestellt, über eine Längskante verklebt und als noch mehr oder weniger zweidimensionales flächiges Produkt zu dem Befüller weiter transportiert. Dort wird dann das flächige Produkt zu einem dreidimensionalen Körper aufgestellt, befüllt, indem eine Zahnpastatube eingeschoben wird, und das Behältnis wird am oberen und unteren Ende verschlossen.

In der Praxis werden solche vorkonfektionierte Schachteln beispielsweise in Chargengrößen von etwa 250 Packungen als horizontal erstreckender Stapel angeliefert. Die Bedienungsperson ergreift sich einen solchen Stapel, der durchaus eine Länge von bis zu einem Meter haben kann und mehrere Kilogramm wiegt, legt die Hände an beiden seitlichen Enden an, presst den Stapel etwas zusammen, hebt diesen von der Transportvorrichtung ab und überbringt diesen Stapel in ein Behältnis.

Diese Transportart ist nicht nur sehr mühsam, sondern führt auch dazu, dass, insbesondere wenn die Handhabungsperson nach mehreren Stunden ermüdet ist, ein solcher Stapel entgleiten kann, wenn nicht mehr genügend Kraft vorhanden ist, diesen von außen zusammenzupressen.

Dies führt dann dazu, dass beispielsweise 250 herab gefallene einzelne flächige Produkte wieder aufgesammelt, und insbesondere wenn sie dann später einer Weiterverarbeitung zugeführt werden, in der diese eine bestimmte Orientierung haben müssen, entsprechend sortiert werden müssen.

Dies ist sehr mühevoll und zeitaufwändig und unterbricht für längere Zeit den Transportvorgang.

Es ist daher Aufgabe der vorliegenden Erfindung, hier Abhilfe zu schaffen und eine Vorrichtung zum Transportieren einer Reihe von solchen flächigen Produkten zu schaffen, bei der dieser Vorgang automatisiert durchgeführt werden kann.

Erfindungsgemäß wird die Aufgabe dadurch gelöst, dass eine Unterdruckeinheit vorgesehen ist, die an einer Unterseite eine längs verlaufende Ansaugöffnung aufweist, durch die Luft über eine Unterdruckquelle ansaugbar ist, wobei eine Reihe von zu transportierenden flächigen Produkten mittels eines durch Unterdruck erzeugten Sogeffekts über deren eine Kante an die Unterseite anhängbar sind, und wobei die Kante beim Transport an der längs verlaufenden Ansaugöffnung anliegt und zu dieser quer ausgerichtet ist.

Es wurde in zahlreichen Versuchen festgestellt, dass es möglich ist, eine Reihe an solchen zu transportierenden flächigen Produkten, die eine über einen Abschnitt definiert verlaufende Kante aufweisen, an eine solche Unterdruckeinheit anzuhängen, und zwar so, dass sich deren definierte Kante quer zur längs verlaufenden Ansaugöffnung erstreckt.

Wenngleich die einzelnen Kanten eines flächigen Produktes eine relativ geringe Angriffsfläche darbieten, wurde festgestellt, dass man eine Reihe von solchen Produkten dennoch sehr fest haftend an eine Ansaugöffnung anlegen kann, so dass diese an der Unterseite der Unterdruckeinheit hängen.

Dabei wurde festgestellt, dass durch die Unterdruckquelle Luft, die in oder zwischen den flächigen Produkten vorhanden ist, zunächst abgesaugt wird, wodurch es möglich ist, die flächigen Produkte sehr eng aneinander schmiegend aufzureihen. Dadurch liegen dann die Kanten relativ eng in einer gleichen Ausrichtung nebeneinander, so dass, über einen gewissen Längenabschnitt gesehen, sich ein quasi mehr oder weniger geschlossener flächiger Körper ergibt, der aus zahlreichen nebeneinander liegenden Kantenabschnitten der Produkte aufgebaut ist. Jede Kante hat eine endliche Breite, die zum Beispiel durch die Dicke des Materials, oder bei Falzkanten durch die Dicke des Falzes bestimmt ist. In der aneinanderliegenden Form kann, bei entsprechender Saugleistung, eine große Anzahl solcher flächiger Produkte fest haftend an die Unterdruckeinheit angebracht werden. In diesem Zustand ist es nun möglich, die so an der Unterseite der Unterdruckeinheit hängenden Produkte an eine andere Stelle, beispielsweise zu einem Behältnis, zu transportieren.

In einer weiteren Ausgestaltung der Erfindung ist dazu die Unterdruckeinheit mit den anhängenden flächigen Produkten bewegbar.

Diese Maßnahme hat den Vorteil, dass nun der Zusammenbau aus der Unterdruckeinheit und den daran anhängenden flächigen Produkten bewegt werden kann, beispielsweise von einem Transportband, von dem die Reihe an flächigen Produkten angeliefert wird, zu einem Behälter zum Weitertransport.

Dazu ist in einer weiteren Ausgestaltung der Erfindung die Unterdruckeinheit mit einer Transporteinheit verbunden, durch die die Unterdruckeinheit zumindest zwischen einer ersten und einer zweiten Position überbringbar ist.

Die Transporteinheit ist den Gegebenheiten angepasst, das kann beispielsweise ein verschwenkbarer Umsetzarm sein, der die Unterdruckeinheit nur umsetzt, die Transporteinheit kann dann auch eine komplett verfahrbare Einheit sein, die die flächigen Produkte zu einer beliebigen abseits gelegenen Stelle verbringt.

In einer weiteren Ausgestaltung der Erfindung ist ein wirksamer Ansaugquerschnitt der Ansaugöffnung veränderbar.

Diese Maßnahme hat nun mehrere Vorteile.

Ein erster Vorteil besteht darin, dass eine Veränderung der wirksamen Ansaugöffnung es ermöglicht, an unterschiedlich lange Reihen von einander angereihten flächigen Produkten anpassen zu können. Der Begriff "Veränderung der wirksamen Ansaugöffnung" bedeutet, dass der Ansaugquerschnitt der Ansaugöffnung über die Luft angesaugt werden kann, insbesondere in seiner Längserstreckung veränderbar ist.

Dabei kann an unterschiedliche Produkte angepasst werden, da beispielsweise 250 aneinander gereihte Briefkuverts eine andere Länge aufweisen können als beispielsweise 250 aneinander liegende, mit einer relativ dicken Falzkante versehene Verpackungen oder dergleichen.

Ein weiterer Vorteil ist, dass bei einem bestimmten flächigen Produkt an eine Schrumpfung der ausgänglichen Reihenlänge angepasst werden kann, wenn zwischen den einzelnen flächigen Produkten vorhandene Luft abgesaugt wurde.

Für einen effizienten und ökonomischen Betrieb ist es notwendig, dass möglichst wenig Totvolumen eingesaugt wird, d.h. Luftmengen, die zwischen oder am vorderen oder hinteren Ende eines Stapels in die Ansaugöffnung eintreten können, sollen möglichst gering sein. Kann dieses Totvolumen möglichst gering gehalten werden, bilden sich zwischen den quer verlaufenden Kanten und der Ansaugöffnung solche Unterdruckverhältnisse aus, dass sowohl das einzelne flächige Produkt als auch die ganze Reihe fest an der Ansaugöffnung gehalten wird.

Ist beispielsweise aufgrund der Geometrie oder dem Herstellvorgang der flächigen Produkte eine relativ große Menge an Luft im Produkt oder zwischen zwei nebeneinander liegenden Produkten vorhanden, so wird diese Luft über die Ansaugöffnung abgesaugt. Dabei schrumpft die Länge des Stapels. Durch die Veränderbarkeit der Länge der Ansaugöffnung kann hier entsprechend angepasst werden, d.h. die Länge der Ansaugöffnung verkürzt werden, so dass am Ende des Stapels kein Bereich der Ansaugöffnung offen bleibt, durch die dann hauptsächlich Luft eingesaugt würde.

In einer Ausgestaltung der Erfindung weist die Vorrichtung ferner eine verschiebbare Abdeckung auf, durch die Bereiche der Ansaugöffnung abdeckbar sind.

Dies ist eine mechanisch einfache Lösung zum Beispiel der Anpassung der Länge der Ansaugöffnung. Es kann auch eine Variation der Breite der Ansaugöffnung durchgeführt werden.

Diese verschiebbare Abdeckung kann nicht nur dazu herangezogen werden, um eine Größenanpassung der Ansaugöffnung sicherzustellen, man kann durch Einbringen der Abdeckung kurzfristig den haftenden Kontakt zwischen der Ansaugöffnung und den anhängenden Produkten unterbrechen, so dass diese dann herabfallen. Dabei können nur Bereiche abgedeckt werden oder die komplette Ansaugöffnung.

Dies kann gezielt durchgeführt werden, wenn die Produkte beispielsweise mit der Unterdruckeinheit über ein Behältnis gebracht wurden und diese von der Unterdruckeinheit weg bewegt werden sollen.

In einer weiteren Ausgestaltung der Erfindung ist die Unterdruckeinheit als eine Saugleiste ausgebildet, an der an einem Ende ein Sauganschluss vorhanden ist und von deren anderem Ende her die verschiebbare Abdeckung einbringbar ist.

Diese Maßnahme hat den Vorteil, dass durch mechanisch sehr einfache Mittel sowohl die Längenanpassung der Ansaugöffnung möglich ist als auch ein Ablösen der Produkte. Diese verschiebbare Abdeckung zeigt aber noch einen weiteren Vorteil, man kann beispielsweise die Abdeckung zunächst sehr weit in die Saugleiste einschieben, so dass die Ansaugöffnung praktisch vollständig geschlossen oder nur geringfügig geöffnet ist. Möchte man die flächigen Produkte nach und nach an die Unterdruckeinheit anbringen, so kann man dann die Abdeckung nach und nach verschieben und dabei die Ansaugöffnung immer länger machen, so dass nach und nach immer mehr Produkte angehängt werden können.

In einer weiteren Ausgestaltung der Erfindung weist die Unterdruckeinheit eine Teleskopsaugleiste auf, durch die die Länge der Ansaugöffnung an der Unterseite veränderbar ist.

Diese Maßnahme hat den Vorteil, dass über diese Teleskopausgestaltungen die Längenveränderung mechanisch sehr einfach durchgeführt werden kann.

In einer weiteren Ausgestaltung der Erfindung ist die Längenveränderung durch einen Antrieb regelbar.

Diese Maßnahme hat den Vorteil, dass durch diesen Antrieb dies voll automatisch durchgeführt werden kann. Der Antrieb wird zum Beispiel so geregelt, dass er zunächst einen solchen Längenbereich der Ansaugöffnung freigibt, wie das für den Stapel notwendig ist. Wird ein Stapel einer bestimmten Länge angeliefert, wird dies eingegeben, so dass der Antrieb dann zunächst einmal die Ansaugöffnung in dieser Länge freigibt. Wie zuvor erwähnt, schrumpft der Stapel mehr oder weniger durch Anlegen des Unterdrucks, so dass dann durch eine entsprechende Steuerung die Länge nachgeregelt werden kann.

In einer weiteren Ausgestaltung der Erfindung ist ein perforierter Transportriemen an der Ansaugöffnung angeordnet, der in einer Transportrichtung längs der Längserstreckung der Ansaugöffnung bewegbar ist, so dass die flächigen Produkte über die Oberkante an dem perforierten Transportriemen hängend transportierbar sind.

Diese Maßnahme hat den Vorteil, dass in dieser Ausgestaltung nicht nur die flächigen Produkte über ihre Kante an die Ansaugöffnung angehängt werden können, sondern durch das Zwischenlegen eines perforierten Transportriemens können diese auch noch längs der Längserstreckung der Ansaugöffnung transportiert werden.

Diese Maßnahme hat den erheblichen Vorteil, dass die Transportvorrichtung an sich dann stationär sein kann, der Längentransport durch den bewegbaren perforierten Transportriemen erfolgt.

In einer weiteren Ausgestaltung der Erfindung weist die Ansaugöffnung eine Mehrzahl an Langlochöffnungen auf, entlang derer die Perforation des Transportriemens läuft.

Durch Vorsehen eines bestimmten Perforationsmusters in dem Transportriemen kann auf die Geometrie der Kante des Produktes eingegangen werden, über die das flächige Produkt angehängt werden soll. Die Größe und Anzahl der Perforationen wird dann so berechnet, dass ein ausreichender Unterdruck sich zwischen der Kante und dem Transportriemen etabliert, so dass das flächige Produkt ausreichend fest hängt und gleichzeitig durch den Transportriemen transportiert werden kann. Aufgrund der Tatsache, dass die Perforation längs den Langlochöffnungen laufen, wird sichergestellt, dass, über den Transportweg gesehen, immer ein Sog bzw. Unterdruck durch die Perforation in dem Transportriemen ausgeübt wird, und somit auch auf das an dem Transportriemen hängende flächige Produkt.

In einer weiteren Ausgestaltung der Erfindung ist die Perforation des Transportriemens durch Löcher gebildet, die als Reihen von Löchern sich sowohl in Längs- als auch in Querrichtung der Ansaugöffnung erstrecken und die mit den Langlochöffnungen kommunizieren.

Dies reflektiert die zuvor schon angesprochene vorteilhafte Maßnahme, nämlich dass über die gesamte Transportlänge des Transportriemens gesehen gute Unterdruckbedingungen geschaffen werden können, die sicherstellen, dass ein flächiges Produkt über seine Kante ausreichend fest am Transportriemen hängt.

In einer weiteren Ausgestaltung der Erfindung weist die Vorrichtung ferner zumindest einen bewegbaren Schieber auf, durch den die an der Unterdruckeinheit hängenden flächigen Produkte wegdrückbar sind.

Diese Maßnahme hat den Vorteil, dass durch den Schieber die flächigen Produkte etwas von der Ansaugöffnung wegbewegt werden können, so dass der haftende Zustand unterbrochen wird. Dadurch lösen sich die anhaftenden Produkte von der Ansaugöffnung oder von dem Transportriemen und können nach unten in ein Behältnis aufgrund der Schwerkraft überbracht werden. Der Schieber kann dann so ausgestaltet sein, dass er diesen Ablöseweg begleitet oder richtet, so dass die herab fallenden Produkte zielgerichtet in ein Behältnis überbracht werden können.

Dazu ist vorteilhaft, dass der Schieber mit seitlich über die Unterdruckeinheit vorstehenden Oberkanten der flächigen Produkte in Eingriff bringbar ist und diese nach unten von der Ansaugöffnung wegdrückt.

Dies ist eine besonders ökonomische und mechanisch einfache Ausgestaltung, um die an der Ansaugöffnung anhängenden Produkte von der Unterdruckeinheit abzulösen.

In einer weiteren Ausgestaltung der Erfindung weist die Unterdruckeinheit einen Unterbrecher auf, über den ein an der Ansaugöffnung angelegter Unterdruck zumindest kurzzeitig unterbrechbar ist.

Diese Maßnahme hat den Vorteil, dass der zuvor beschriebene Ablösevorgang durch ein Unterbrechen der Ansaugleistung gesteuert wird, so dass dann dieser Ablösevorgang ausgelöst wird.

Es ist möglich, beide Maßnahmen zu kombinieren, d.h. sowohl eine kurzzeitige Unterbrechung als auch zusätzlich einen Schieber vorzusehen, insbesondere wenn dieser auch noch führende Aufgaben erfüllt, um die herab fallenden Produkte ordentlich ausgerichtet in ein Behältnis zu überbringen.

Es versteht sich, dass die vorstehend genannten und die nachstehend noch zu erläuternden Merkmale nicht nur in den jeweils angegebenen Kombinationen, sondern auch in anderen Kombinationen oder in Alleinstellung einsetzbar sind, ohne den Rahmen der vorliegenden Erfindung zu verlassen.

Die Erfindung wird nachfolgend anhand einiger ausgewählter Ausführungsbeispiele in Zusammenhang mit den Zeichnungen näher beschrieben und erläutert. Es zeigen:
- Fig. 1: ein erstes Ausführungsbeispiel einer erfindungsgemäßen Vorrichtung in einer Seitenansicht,
- Fig. 1a: die Vorrichtung aus Fig. 1, stark schematisiert, in einer Draufsicht,
- Fig. 2a und 2b: schematische Darstellungen eines flächigen Produktes in Form eines Briefkuverts,
- Fig. 3a und 3b: eine erste Blende, die in eine Ansaugöffnung einsetzbar ist, in Draufund Seitenansicht,
- Fig. 4a und 4b: eine zweite Blende in einer Drauf- und einer Seitenansicht,
- Fig. 5a und 5b: einen Zusammenbau aus erster und zweiter Blende,
- Fig. 6: eine Draufsicht auf einen Ausschnitt eines perforierten Transportriemens, an dem ein flächiges Produkt hängt,
- Fig. 7: eine Draufsicht auf den Transportriemen von Fig. 6, der auf dem in Fig. 5a und 5b dargestellten Zusammenbau aus erster und zweiter Blende liegt,
- Fig. 8 und 8a: eine schematische Seitenansicht des ersten Ausführungsbeispiels der Vorrichtung mit zusätzlichen Schiebern sowie deren Funktionsweise,
- Fig. 9: eine stark vereinfachte Draufsicht der Vorrichtung von Fig. 8 mit den zusätzlichen Schiebern,
- Fig. 10: eine Darstellung der erfindungsgemäßen Unterdruckeinheit in einer erfindungsgemäßen Transporteinrichtung,
- Fig. 11: stark schematisch eine Seitenansicht eines zweiten Ausführungsbeispiels einer Unterdruckeinheit in Form einer Teleskopsaugleiste,
- Fig. 12: eine Ansicht der Teleskopsaugleiste von unten in Richtung auf die Ansaugöffnung,
- Fig. 13: eine stirnseitige Ansicht der Teleskopsaugleiste,
- Fig. 14: die Teleskopsaugleiste von Fig. 11 in einem Betriebszustand kurz vor dem Einstechen in eine Reihe an flächigen Produkten,
- Fig. 15: eine Situation, in der die Teleskopsaugleiste in eine Reihe an flächigen Produkten eingestochen ist und die Produkte über deren Oberkante an der Ansaugöffnung angesaugt sind,
- Fig. 16: einen weiteren Betriebszustand der Teleskopsaugleiste mit geschrumpften Stapel,
- Fig. 17: einen Betriebszustand der Teleskopsaugleiste beim Einfahren in einen Behälter für die Produkte,
- Fig. 18: einen Betriebszustand der Teleskopsaugleiste nach Abgabe der Produkte in den Behälter,
- Fig. 19: ein drittes Ausführungsbeispiel einer Unterdruckeinheit in Unteransicht auf deren Ansaugöffnung gesehen, die mit einer verschiebbaren Abdeckung versehen ist, und
- Fig. 20: einen Betriebszustand des dritten Ausführungsbeispiels der Saugleiste beim Anbringen von flächigen Produkten an die Ansaugöffnung.

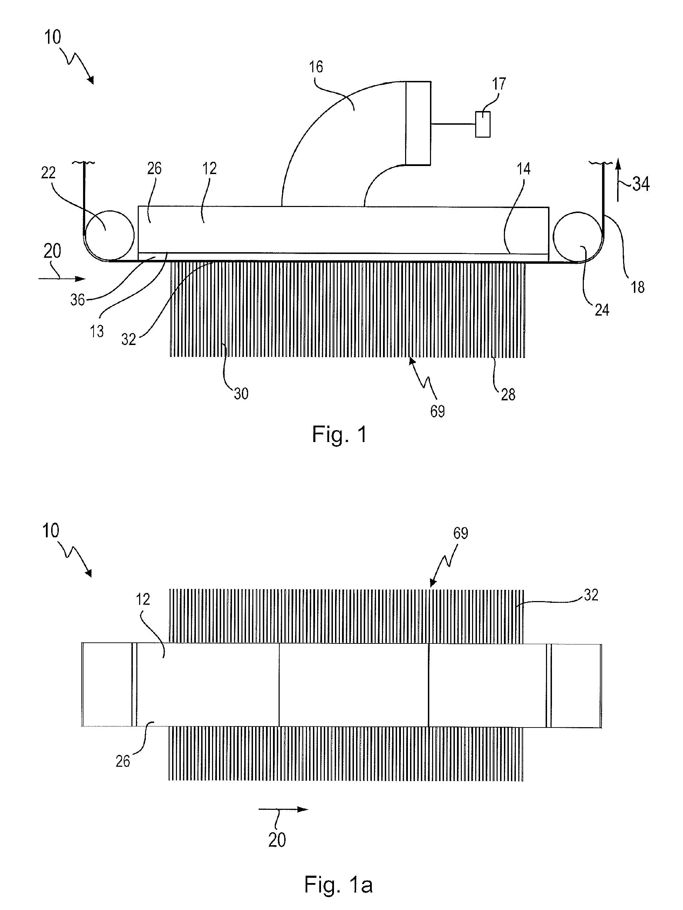

Ein in den Fig. 1 bis 10 dargestelltes erstes Ausführungsbeispiel einer erfindungsgemäßen Vorrichtung ist in ihrer Gesamtheit mit der Bezugsziffer 10 bezeichnet.

Wie insbesondere in Fig. 1 und 1a zu sehen ist, weist die Vorrichtung 10 eine Unterdruckeinheit 12 auf. Die Unterdruckeinheit 12 ist im Querschnitt als etwa U-förmiger Kasten 26 ausgebildet, dessen Unterseite 13 mit einer Ansaugöffnung 14 versehen ist. Am oberen Ende ist ein Anschluss 16 vorgesehen, der die Unterdruckeinheit mit einer hier nicht näher dargestellten Unterdruckquelle 17 verbindet.

Die Unterdruckeinheit 12 weist ferner einen perforierten Transportriemen 18 auf, der in Längsrichtung der Ansaugöffnung 14 in eine Transportrichtung 20 geführt wird. Der Transportriemen 18 läuft dabei über Rollen 22 und 24, durch die der Transportriemen 18 entlang der Unterseite 13 der Unterdruckeinheit 12 bewegt wird. Der Transportriemen 18 ist als ein Endlostransportriemen ausgebildet.

Die Vorrichtung 10 dient dazu, dass flächige Produkte 28, die zumindest über einen gewissen Abschnitt eine definierte Kante 32 aufweisen, durch einen Unterdruck an dem Transportriemen 18 hängend angebracht werden und von diesem in die Transportrichtung 20 transportiert werden.

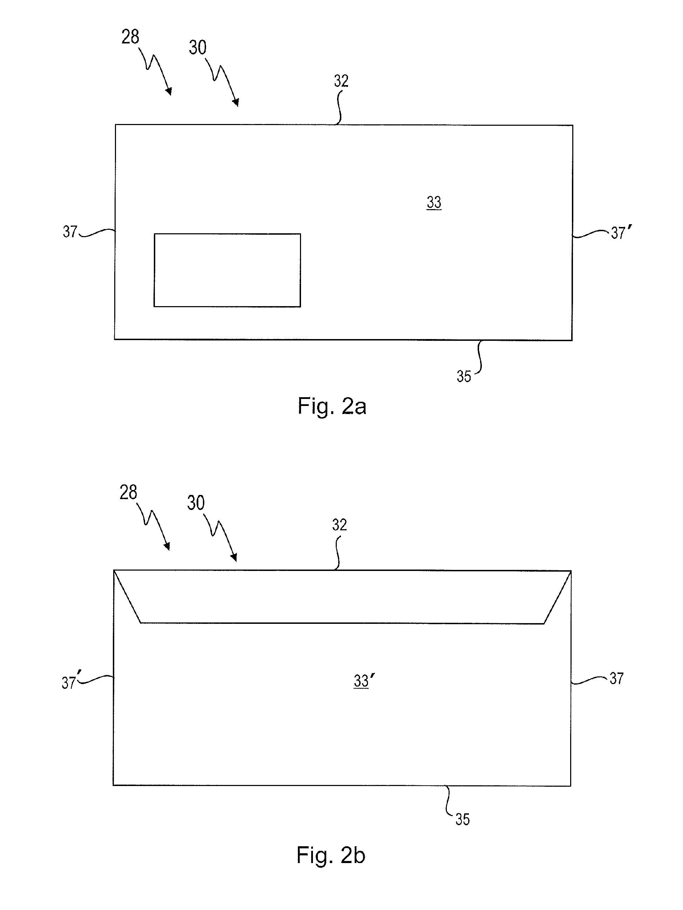

Als ein Beispiel für ein derartiges flächiges Produkt 28 ist in Fig. 2a und 2b ein Briefkuvert dargestellt. Dieses weist eine Vorderseite 33, eine Rückseite 33' auf, sowie zwei Seitenkanten 37 und 37'.

Ferner sind eine Oberkante 32 und eine Unterkante 35 vorhanden, die insgesamt gesehen das etwa rechteckförmige Briefkuvert 30 umgrenzen.

Ein Abschnitt der Oberkante 32 verläuft dabei geradlinig, so dass dieses Briefkuvert 30 in der in Fig. 1 und 1a dargestellten Position über diese Oberkante 32 an den Transportriemen 18 haftend angebracht und von diesem transportiert werden kann.

Die Anordnung der flächigen Produkte an der Unterseite 13 der Unterdruckeinheit wird erfindungsgemäß so realisiert, dass ein entsprechender Unterdruck an die Ansaugöffnung 14 angelegt wird. Dieser Unterdruck sorgt für einen Sogeffekt. Dieser Sogeffekt hat zur Folge, dass ein Volumenstrom an Luft in die Ansaugöffnung 14 eintritt.

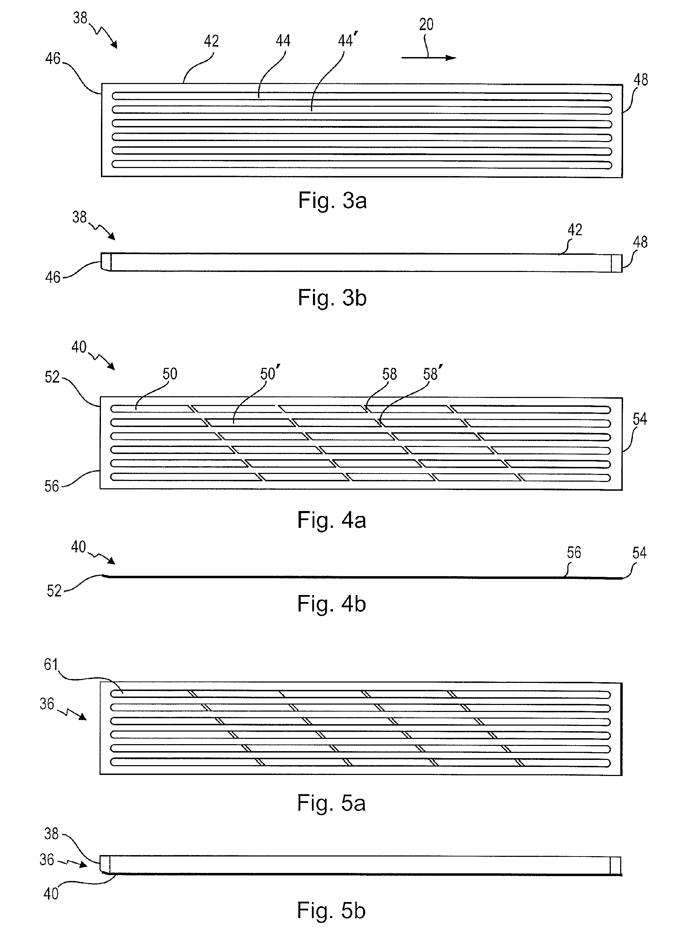

In den Fig. 3 bis 5 ist die nähere Ausgestaltung der Unterdruckeinheit 12 im Bereich der Ansaugöffnung 14 dargestellt. In die Unterseite 13 der Unterdruckeinheit 12 ist ein in Fig. 5a und 5b dargestelltes Blendenelement 36 eingesetzt. Das Blendenelement 36 weist eine erste Blende 38 auf, wie sie in Fig. 3a und 3b dargestellt ist. Aus der Draufsicht von Fig. 3a ist ersichtlich, dass die erste Blende aus einem rechteckigen Grundkörper 42 aufgebaut ist, der mehrere sich in Transportrichtung 20 erstreckende durchgehende Langlochöffnungen 44 und 44' aufweist. Im Bereich der gegenüberliegenden kürzeren Seiten 46 und 48 ist die erste Blende 38 geschlossen, diese Länge der Seiten entspricht der Breite der Ansaugöffnung 14. Der Grundkörper 42 ist relativ dick gebaut, aus Gewichtsgründen aus einem leichtgewichtigen Material, beispielsweise aus Holz.

In Fig. 4a und 4b ist eine zweite Blende 40 ersichtlich, die wesentlich dünner und aus einem Material mit einer glatten Oberfläche, beispielsweise einem hochglanzpolierten Edelstahl oder aus einem entsprechenden Kunststoffmaterial hergestellt ist. Auch die zweite Blende 40 weist Langlochöffnungen 50 und 50' auf, die deckungsgleich mit den Langlochöffnungen 44 und 44' ausgebildet sind. Aus Gründen der Stabilität sind Stege 58, 58' stehengeblieben.

Die gegenüberliegenden kurzen Enden 52 und 54 weisen dieselbe Breite wie die Enden 46 und 48 der ersten Blende 38 auf, so dass die zweite Blende 40 passend auf die erste Blende 38 gelegt werden kann, wie das in den Fig. 5a und 5b dargestellt ist. Dabei liegt die zweite Blende 40 an der unteren Seite der ersten Blende 38 an, d.h. über diese zweite Blende 40 läuft dann reibungsarm der Transportriemen 18. Wie aus Fig. 5a ersichtlich, sind somit durch den gesamten Körper des Blendenelements 36 durchgehende Saugkanäle 61 ausgebildet.

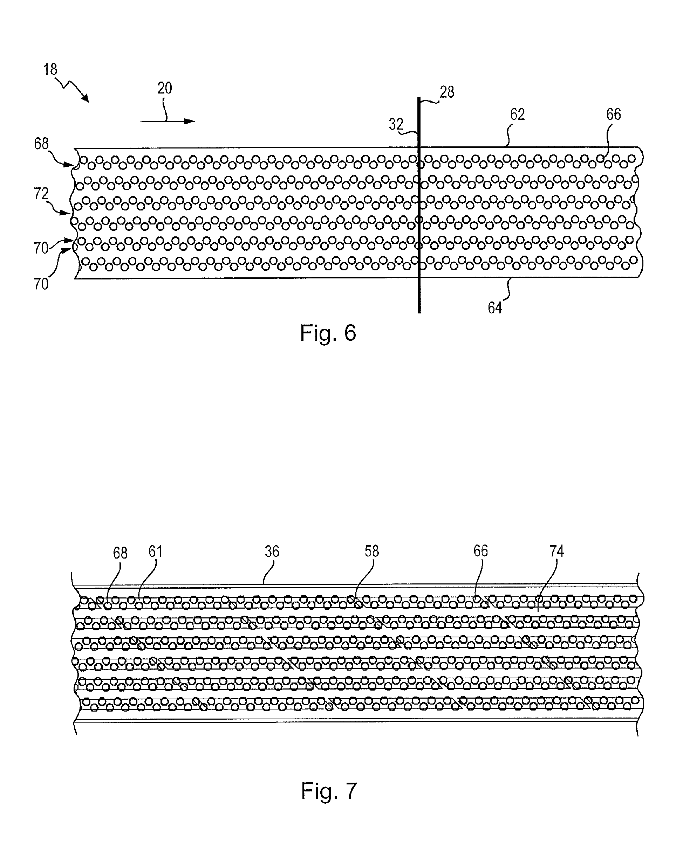

In Fig. 6 ist eine Draufsicht auf den Transportriemen 18 ersichtlich.

Der Transportriemen 18 weist zwei gegenüberliegende Ränder 62 und 64 auf, die parallel zur Transportrichtung 20 verlaufen. Der Transportriemen 18 weist als Perforation Löcher 66 auf. Diese kreisrunden Löcher 66 sind in Reihen 68 angeordnet, wobei die fünf Reihen 68 so angeordnet sind, dass diese entlang der durch die Langlochöffnungen von erster und zweiter Blende gebildeten Kanäle 61 laufen.

Dabei ist jede Reihe 68 aus zwei Unterreihen 70 aufgebaut, die auf Lücke gesetzt sind, d.h. die Öffnungen einer Unterreihe 70 liegen jeweils in Lücken zwischen den Öffnungen der benachbarten Unterreihe 70. Stellt man sich wie in Fig. 6 dargestellt ein flächiges Produkt 28 mit seiner geradlinig verlaufenden Kante 32 quer zur Tarnsportrichtung 20 erstreckend angeordnet bzw. anhängend vor, so ist ersichtlich, dass diese Oberkante 32 mit mehreren Öffnungen 66 der Perforation in Deckung steht, wobei über die Perforation der Sogeffekt ausgeübt wird, sprich die Luft zwischen der Oberkante 32 und der Öffnung 66 permanent abgesaugt wird.

In Fig. 7 ist dargestellt, wie die Reihen 68 der Löcher 66 des Transportriemens 18 über die längs verlaufenden Kanäle 61 des Blendenelementes 36 in Transportrichtung laufen können. Dadurch ist es dann möglich, ein wie in Fig. 1 und 1a dargestelltes, an der Unterseite hängendes flächiges Produkt 28 in der Transportrichtung 20 zu bewegen.

Dabei werden mehrere Produkte 28 in einer Reihe stehend an die Unterseite 13 der Unterdruckeinheit 12 gebracht, wie das in Fig. 1 und 1a ersichtlich ist. Dabei wird Luft zwischen den einzelnen Produkten 28 abgesaugt, so dass sich diese zu einem kompakten Block 69 zusammenfügen, der en bloc über seine zahlreichen Oberkanten 32 an der Unterseite der Unterdruckeinheit 12 hängt und durch diese in der Transportrichtung 20 bewegbar ist.

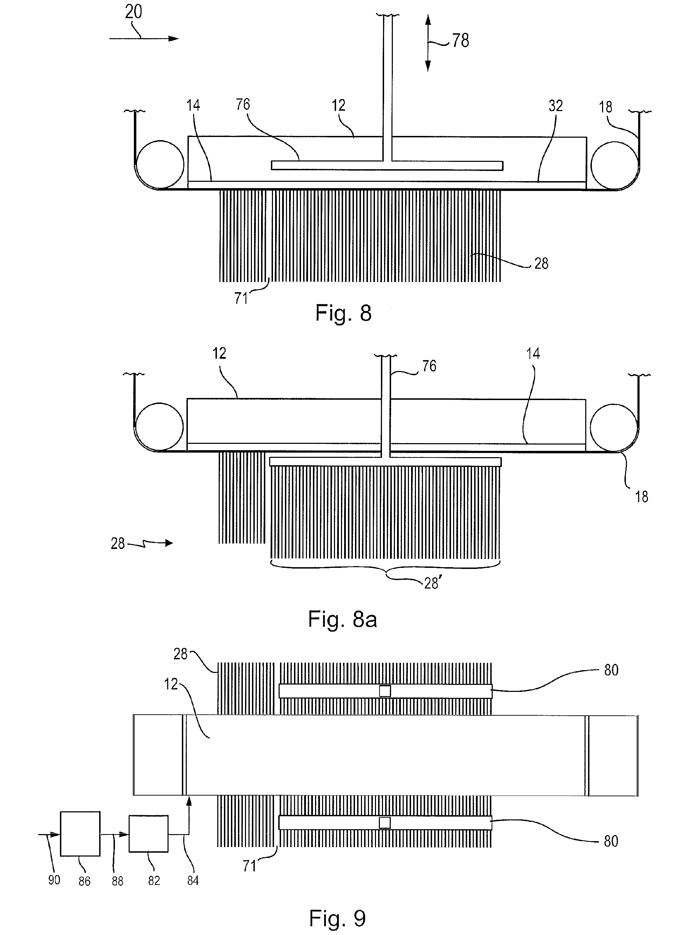

In den Fig. 8 bis 9 ist dargestellt, dass die Unterdruckeinheit 12 ferner einen Schieber 76 aufweist. Dieser ist, wie das in Fig. 8 ersichtlich ist, in vertikaler Richtung 78 bewegbar, wobei er, wie das insbesondere aus Fig. 8a und 9 ersichtlich ist, mit der Oberkante 32 der Produkte 28 in Berührung treten kann, insbesondere in dem Abschnitt, in dem diese seitlich über die Unterdruckeinheit 12 hinausschauen.

Der Schieber 76 weist zwei Schieberpaare 80 auf, die beidseits der Unterdruckeinheit 12 an die Oberseite des Blockes 69 angelegt werden können und diesen vom haftenden Kontakt mit dem Transportriemen 18 bzw. der Unterdruckeinheit 12 lösen. In Fig. 8a ist das beispielhaft so dargestellt, dass aus der gesamten Reihe an Produkten 28 der aus den Produkten 28' zusammengesetzte Block 69 weggedrückt wird, das kann selbstverständlich auch so erfolgen, dass die gesamte Reihe oder ein in Transportrichtung 20 vorlaufender Abschnitt weggedrückt wird, das ist nur zur Erläuterung des Funktionsprinzips so eingezeichnet. In Fig. 9 ist angedeutet, dass in der Druckeinheit 12 auch ein Unterbrecher 82 vorhanden sein kann. Durch den Unterbrecher 82 ist der an der Ansaugöffnung 14 anliegende Unterdruck beeinflussbar.

Im Transportmodus funktioniert der Unterbrecher 82 so, dass der notwendige Unterdruck zur Verfügung gestellt wird, so dass die Produkte 28 fest haftend am Transportriemen 18 anliegen. Zum Ablegen oder Überbringen der Produkte 28 in ein Behältnis kann über eine Steuereinheit 86 und entsprechende Signalleitungen 90, 88 und 84 der Unterdruck kurzzeitig so weit unterbrochen werden, dass der Sogeffekt unterbrochen oder abgeschwächt wird, so dass die Produkte 28 vom Transportriemen 18 beispielsweise in ein Behältnis abfallen.

Dies kann noch synchron mit der Bewegung des Schiebers 76 gekoppelt werden, so dass dieser die Produkte 28 ganz gezielt in ein Behältnis überführt.

Dies kann bei laufendem Transportriemen 18 erfolgen oder der Transportriemen 18 wird zu diesem Vorgang kurzzeitig angehalten, wobei dies über die Steuereinheit 86 erfolgt.

Die Steuereinheit 86 kann Daten von beliebigen, hier nicht näher bezeichneten Einheiten erhalten, wie das beispielsweise durch den Pfeil 90 angedeutet ist. Diese Informationen können beispielsweise in Bezug auf Briefkuverts Postleitzahlen oder Postleitzahlenbereiche sein, nach denen die Briefkuverts aufgeteilt werden sollen. Ist beispielsweise ein Block 69 aus Briefkuverts 28' eines bestimmten Postleitzahlenbereichs gebildet, kann der Transportriemen kurzzeitig etwas schneller bewegt werden, so dass zu den nachfolgenden Produkten 28 eine Lücke 71 entsteht.

Dieser Block 69 kann dann ganz definiert von dem Schieber 76 abgeschoben werden. Dabei ist es dann auch unerheblich, ob dieser Block 69 so lang ist wie dargestellt oder auch kürzer. Der Schieber 76 bzw. die Schieberpaare 80 können auch so ausgebildet sein, dass sie sich über die gesamte maximale Länge eines anzuhängenden Blockes erstrecken. Die Länge der Schieberpaare 80 kann auch veränderbar sein.

Die Unterdruckeinheit 12 kann variabel an unterschiedliche Produkte 28 angepasst werden, also an unterschiedlich breite und schwere Produkte, indem zum einen entweder der Unterdruck variiert wird, oder entsprechend andere Blendenelemente und Transportriemen eingesetzt werden.

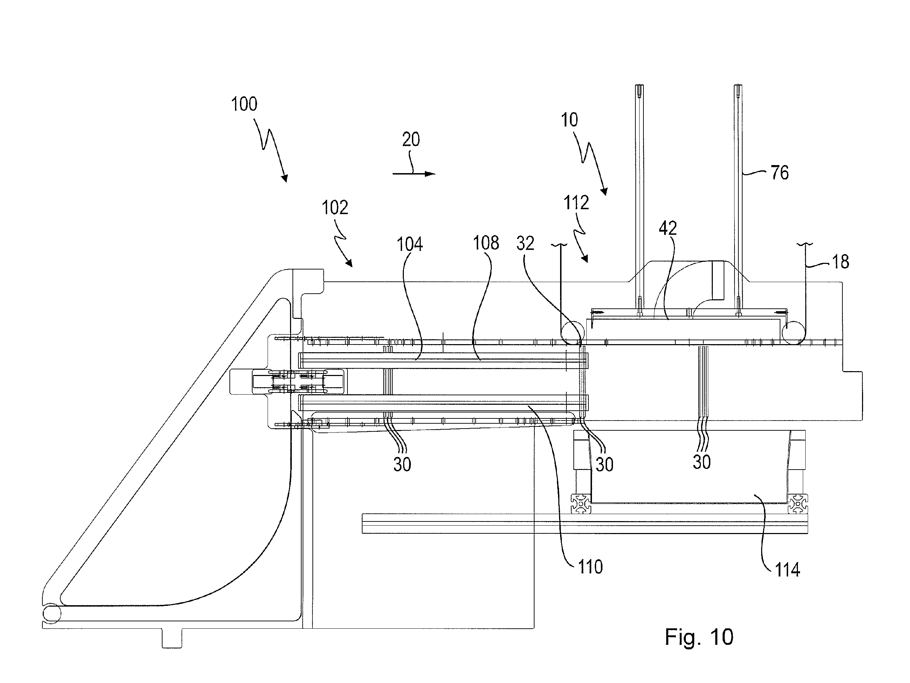

In Fig. 10 ist ein Ausführungsbeispiel dargestellt, bei dem die erfindungsgemäße Vorrichtung 10 in eine Gesamtvorrichtung 100 integriert ist. Die Gesamtvorrichtung 100 weist eine Transporteinheit 102 auf, die ihrerseits zwei Transportelemente 104 und 106 aufweist. Von diesen Transportelementen 104 und 106 ist in Fig. 10 nur das Transportelement 104 erkennbar. Das Transportelement 104 weist horizontal verlaufende Transportbänder 108 und 110 auf, gleiches gilt für das Transportelement 106, das vom Betrachter aus gesehen hinter dem Transportelement 104 liegt. Die Transportbänder 108 und 110 liegen dabei an einer der stehenden Seitenkanten 37 bzw. 37' der Briefkuverts 30 an, die Transportbänder der zweiten Transportelemente 106 dann an den entsprechenden gegenüberliegenden Kanten. Das heißt, die Kuverts 30 werden von einer Vorstation kommend stehend ausgerichtet und zunächst über ihre Seitenkanten 37, 37' in der Transporteinheit 102 in die Transportrichtung 20 transportiert und dabei schon zu einem Block 69 ausgebildet. Am Ende der Transporteinheit 102 gelangen die Kuverts 30 in einen Übergangsbereich 112. Von diesem Übergangsbereich 112 werden die Briefkuverts 30 in die erfindungsgemäße Vorrichtung 10 überführt. In diesem Übergangsbereich 112 werden die Kuverts 30 zunächst noch durch die Transporteinheit 102 an ihren Seitenkanten 37, 37' gehalten, sie werden aber dann auch schon an ihrer Oberkante 32 von der Unterdruckeinheit 12 erfasst. Durch Bewegen des Transportriemens 18 werden diese dann weiter in der Transportrichtung 20 bewegt, beispielsweise über einen Transportbehälter 114 gebracht. Durch Betätigen des Schiebers 76 können die Produkte 30 von der Unterdruckeinheit weggedrückt und in den Transportbehälter 114 überbracht werden.

Dies kann auch durch den zuvor beschriebenen Unterbrecher 82 bzw. durch die Steuereinheit 86 erfolgen oder unterstützt werden.

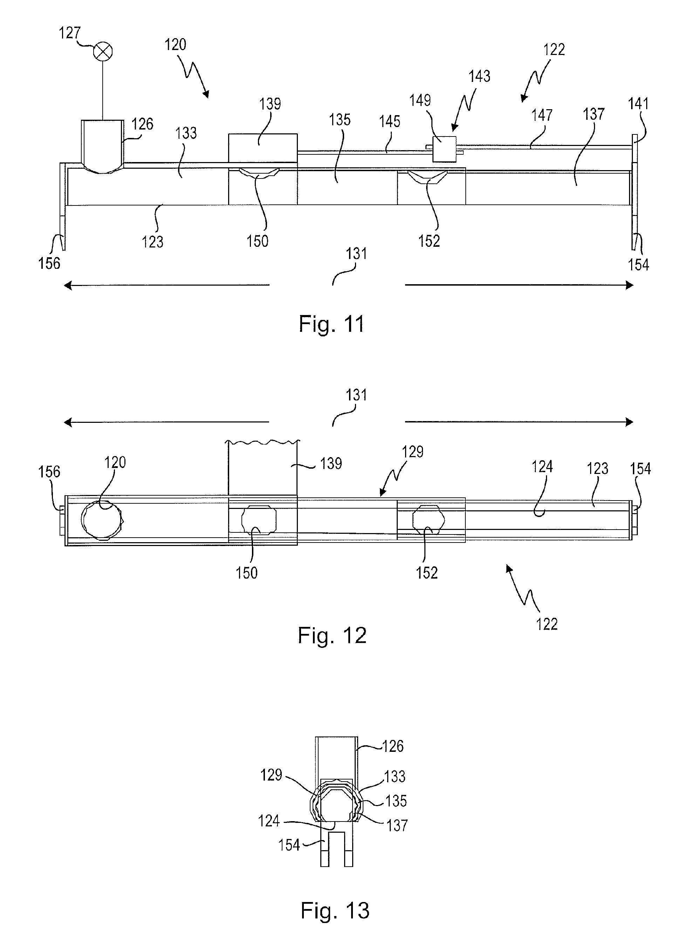

In den Fig. 11 bis 18 ist ein zweites Ausführungsbeispiel einer erfindungsgemäßen Vorrichtung dargestellt, die in ihrer Gesamtheit mit der Bezugsziffer 120 bezeichnet ist.

Ein wesentliches Bauelement der Vorrichtung 120 ist die Unterdruckeinheit 122. Die Unterdruckeinheit 122 weist an ihrer Unterseite 123 wieder eine längs verlaufende etwa rechteckförmige Ansaugöffnung 124 auf, wie das auch aus Fig. 12 ersichtlich ist.

Über einen an einem Endbereich angeordneten Anschluss 126 ist die Unterdruckeinheit 122 mit einer Unterdruckquelle 127 verbunden.

Die Unterdruckeinheit 122 weist eine Teleskopsaugleiste 129 auf, deren maximale Länge 131 dargestellt ist.

Die Teleskopsaugleiste 129 weist eine erste Teleskopleiste 133 auf, in die eine zweite Teleskopleiste 135 einfahrbar ist, wobei in die zweite Teleskopleiste 135 noch eine dritte Teleskopleiste 137 einfahrbar ist.

Die erste Teleskopleiste 133 ist fest mit einem Arm 139 verbunden, über den die Unterdruckeinheit 122 als komplette Baueinheit bewegbar oder verschwenkbar ist. Zwischen dem Arm 139 und dem ausfahrbaren Ende 141 ist ein Antrieb 143 angeordnet, der zwei seitlich versetzte parallele Spindeln 145 und 147 aufweist, die in einer gemeinsamen etwa mittigen Buchse 149 aufgenommen sind. Durch Betätigen des Antriebes 143 kann die Teleskopsaugleiste 129 in ihre maximale Ausfahrstellung 131, wie sie in Fig. 11 und 12 dargestellt ist, gebracht werden und aus dieser, wie nachfolgend beschrieben, in eine mehr oder weniger eingezogene Stellung gebracht werden. Um die Zeichnungen nicht mit diesen Details zu überfrachten, ist dieser Antrieb nur in Fig. 11 dargestellt. An dieser Stelle sei zu erwähnen, dass die Teleskopsaugleiste 129 auch ohne den Antrieb 143 arbeiten kann, dann muss man das ausfahrbare Ende 141 von Hand bewegen. Es ist auch vorgesehen, das Ausfahren der Teleskopleiste durch eine Feder zu unterstützen, so dass das Einfahren gegen die Kraft der Feder erfolgt. Um in allen Ausfahrstellungen den von der Unterdruckquelle 127 ausgeübten Unterdruck gleichmäßig über die gesamte Ansaugöffnung 124 verteilen zu können, sind in der zweiten und dritten Teleskopleiste 135 bzw. 137 entsprechende Sauganschlussöffnungen 150, 152 vorgesehen.

Wie insbesondere aus der Seitenansicht von Fig. 11 und der stirnseitigen Ansicht von Fig. 13 ersichtlich, stehen von den gegenüberliegenden Enden der Teleskopsaugleiste 129 nach unten gerichteten Eintauchgabeln 154, 156 vor.

In der Figurenfolge 14 bis 18 ist eine Verfahrensweise beschrieben, wie sie mit der Unterdruckeinheit 122 entsprechend der Erfindung durchgeführt werden kann.

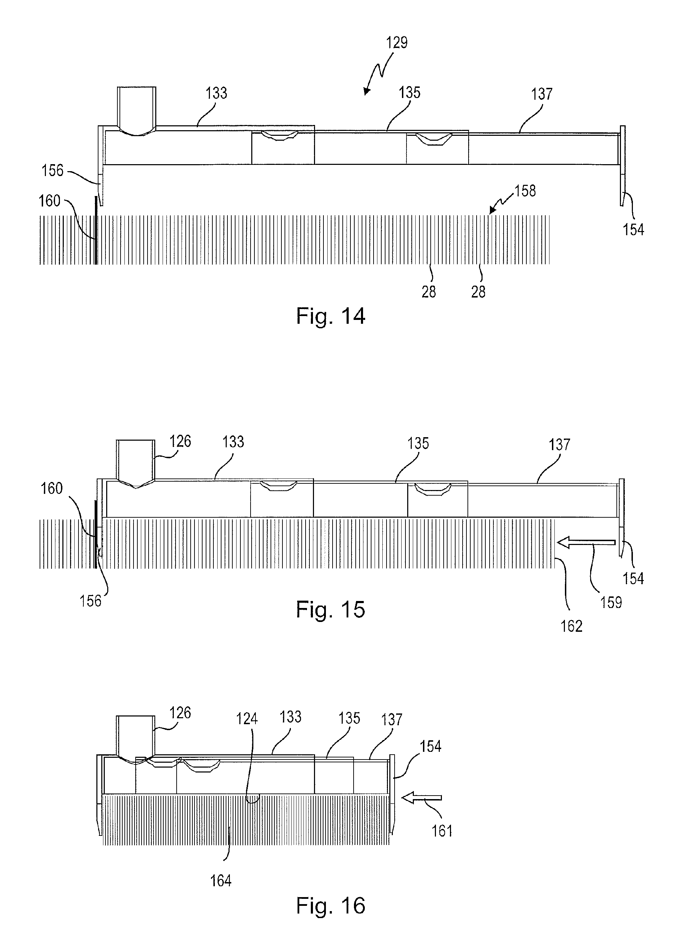

In Fig. 14 ist ersichtlich, dass eine Reihe 158 von stehenden Produkten 28, im dargestellten Ausführungsbeispiel wieder Briefkuverts, bereitgestellt wird. Ein Trennblatt 160 trennt ein hinteres bzw. nachlaufendes Ende der Reihe 158 von einer nächsten Reihe ab.

Die Unterdruckeinheit 122 wird nun über den Arm 139 so über die Reihe 158 gebracht, dass die Eintauchgabel 156 von oben unmittelbar hinter dem Trennblatt 160 in die Reihe 158 eintaucht, wie das aus dem Übergang von Fig. 14 zu Fig. 15 ersichtlich ist. Hier ist dargestellt, dass die Teleskopsaugleiste 129 der Unterdruckeinheit 122 weiter ausgefahren ist als das rechte äußere vorlaufende Ende der Reihe 158. Durch Betätigen des hier nicht näher dargestellten Antriebes wird das ausgefahrene Ende 141, also die Eintauchgabel 154 an dieses äußere Ende 162 der Reihe 158 angelegt, wie das durch einen Pfeil 159 angedeutet ist. Durch die Unterdruckquelle 127 wird die Reihe 158 angesaugt, wobei dabei insbesondere auch die Luft zwischen den einzelnen Produkten 28 der Reihe 158 über die etwa rechteckförmige Ansaugöffnung 124 abgesaugt wird.

Dadurch schrumpft die Reihe 158 zu einem komprimierten Stapel 164, wie das in Fig. 16 dargestellt ist. Dabei wird das rechte Ende, sprich die Eintauchgabel 154 laufend nachgeführt, liegt also somit unter Druck an dem rechten äußeren Ende 162 des komprimierten Stapels 164 an.

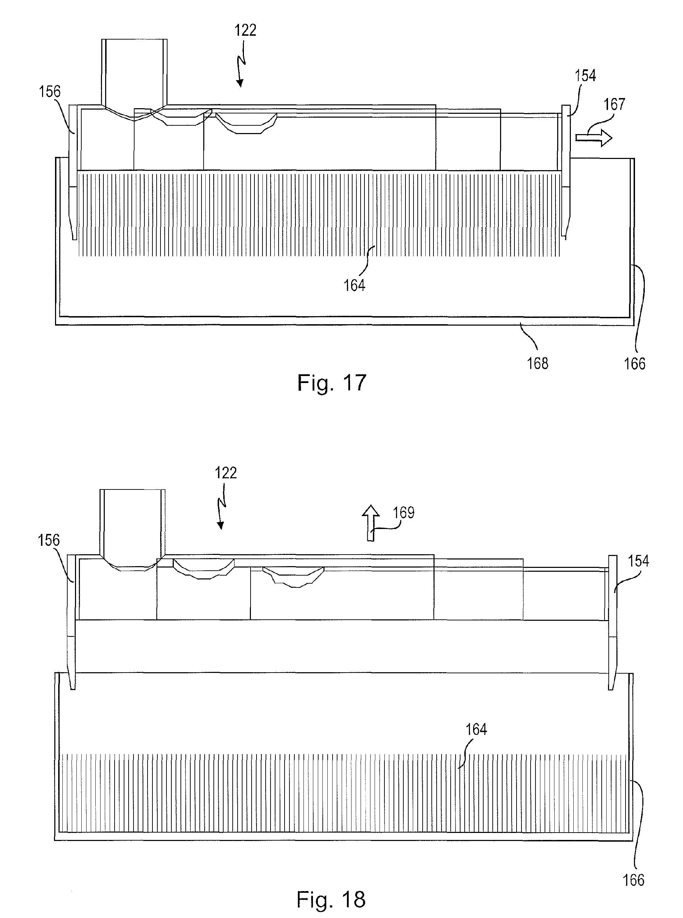

In diesem komprimierten Zustand liegt eine Fläche der Oberseite des komprimierten Stapels 164, die Ansaugöffnung 124 vollkommen abdeckend, an, wobei diese Fläche durch die eng aneinander liegenden Oberkanten 32 der Briefkuverts 30 zusammengesetzt ist. Eine Ansaugöffnung 124 mit dem Maß von 65 x 2 cm ergibt eine Ansaugfläche von 130 cm². Bei einem Unterdruck von -0,2 bar kann eine Last von ca. 25 kg (258 N) angehängt werden. Der Stapel 164 ist so fest durch den Unterdruck gehalten, dass nunmehr die komplette Unterdruckeinheit 122 bewegt werden kann, beispielsweise über einen in Fig. 17 und 18 dargestellten Behälter 166 überbracht werden kann.

Wie insbesondere aus Fig. 17 zu erkennen, fährt die Unterdruckeinheit 122 von oben in das offene Ende des Behälters 166 ein. Das kann so weit durchgeführt werden, bis der komprimierte Stapel 164 auf dem Boden 168 des Behälters 166 zum Liegen kommt oder dies kann auch so erfolgen, dass dieser in einem gewissen Abstand über dem Boden 168 gehalten wird.

Das bewegliche Ende der Teleskopsaugleiste 129 mit der Eintauchgabel 154 wird dann etwas ausgefahren, wie das durch den Pfeil 167 angedeutet ist.

Der komprimierte Stapel 164 rutscht dann entweder vollständig auf den Boden 168 ab, oder wenn dieser schon aufsteht, kann in diesem Zustand die Unterdruckeinheit 122 nach oben wegbewegt werden, wie das in Fig. 18 durch den Pfeil 169 dargestellt ist.

Anschließend weitet sich der komprimierte Stapel 164 etwas aus, d.h. zum Teil kann Luft wieder zwischen die einzelnen Produkte eintreten oder insbesondere wenn diese gefaltete Produkte sind, spreizen diese sich wieder etwas auf und füllen das Behältnis 166 komplett aus.

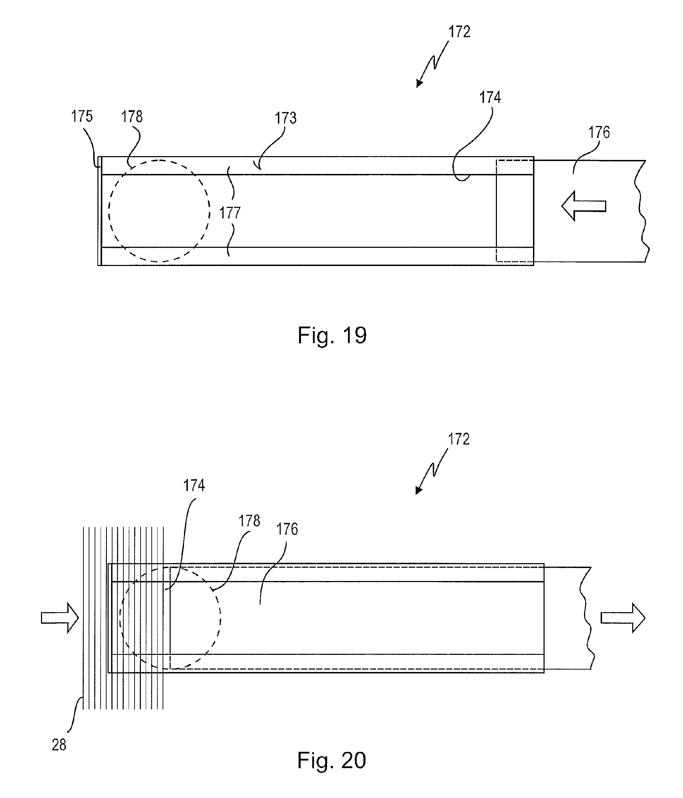

In den Fig. 19 und 20 ist ein drittes Ausführungsbeispiel einer erfindungsgemäßen Unterdruckeinheit 172 dargestellt.

Die Unterdruckeinheit 172 besteht aus einem U-förmigen Hohlprofil, dessen Unterseiten des U noch jeweils nach innen abgewinkelte Ränder 177 aufweisen. An einem Ende ist die dadurch gebildete Saugleiste 175 abgeschlossen. Über eine Ansaugöffnung 178 in der Oberseite ist die Unterdruckeinheit 172 mit einer hier nicht näher dargestellten Unterdruckquelle verbunden.

In den Innenraum der Saugleiste 175 kann seitlich eine Abdeckung 176 in Form eines Schiebbleches eingeschoben werden, wie das in Fig. 19 durch einen Pfeil dargestellt ist. Dabei liegt die Abdeckung 176 auf den nach innen stehenden Rändern 177 auf.

Der wirksame Querschnitt der Ansaugöffnung 174 ist somit durch die Längskanten der Ränder 177, den Abschluss an einer linken Seite und durch die Lage der Abdeckung 176 bestimmt. Je weiter die Abdeckung 176 eingeschoben ist, desto geringer ist die Länge der Ansaugöffnung 174.

Die Abdeckung 176 sorgt auch für einen luftdichten Abschluss der Saugleiste 175 zu der rechten Seite, von der die Abdeckung 176 eingeschoben wird.

In Fig. 20 ist eine Situation dargestellt, in der die Abdeckung 176 sehr weit in die Saugleiste 175 eingeschoben ist, so dass nur eine reduzierte kleine Ansaugöffnung 174 verbleibt. Hier ist dargestellt, dass bereits einige Produkte 28 über deren Oberkante hängend an der Ansaugöffnung 174 angeordnet sind.

Dies kann nun dadurch geschehen, dass, wie zuvor in Zusammenhang mit Fig. 10 beschrieben, die Produkte 28 entsprechend an die Unterseite 173 herangeführt werden. Je weiter die Abdeckung 176 nach rechts herausgezogen wird, umso größer wird die Ansaugöffnung 174 und umso mehr Produkte können nachgeschoben werden. Dieses Nachschieben kann beispielsweise durch einen nachlaufenden Schieber, wie er in Fig. 20 durch den linken Pfeil dargestellt ist, oder eben durch ein zuvor beschriebenes perforiertes Transportband erfolgen. Je nach Ausgestaltung kann dann unter Aufrechterhaltung des Unterdruckes ein entsprechender kompletter Stapel an der Unterseite 173 der Unterdruckeinheit 172 hängend transportiert oder komplett mit dieser an eine andere Stelle verbracht werden. Durch Wiedereinführen der Abdeckung 176 in den Innenraum der Unterdruckeinheit 172 kann die Ansaugöffnung 174 von der rechten Seite her wieder verschlossen werden, mit der Konsequenz, dass in diesem Bereich anhängende Produkte 28 abfallen, da hier der Unterdruck nicht mehr aufrecht erhalten wird.

Dies stellt somit eine grundsätzliche Möglichkeit dar, die an einer Unterseite einer der dargestellten Unterdruckeinheiten anhängenden Produkte 28 abzulösen.

Es ist möglich, eine Abdeckung 176 nicht wie dargestellt in der Transport- oder Längsrichtung einzuschieben, sondern das kann quer zur Transportrichtung erfolgen, so dass quasi auf einen einzigen Schlag ein kompletter anhängender Block abgelöst werden kann.

Bei der Konstruktion von Fig. 19 und 20 können durch abschnittweises Einschieben der Abdeckung 176 nach und nach einzelne Blöcke in unterschiedliche Behälter abgelegt werden.

Ist beispielsweise die Unterdruckeinheit 172 relativ lang und sind beispielsweise drei Blöcke bestimmter Länge, die jeweils bei Briefkuverts einem Postleitzahlenbereich entsprechen, an der Unterseite 173 angehängt, kann durch jeweils entsprechendes zügiges Vorschieben der Abdeckung 176 nach und nach ein solcher Block abgelöst und in einen darunter liegenden Transportbehälter überbracht werden.

Die zuvor beschriebenen konkreten Ausführungsbeispiele der verschiedenen Unterdruckeinheiten können entsprechend kombiniert werden, d.h. die Abdeckung 176 des Ausführungsbeispiels von Fig. 19 und 20 kann durch einen entsprechenden Antrieb hin- und herbewegt werden oder auch von Hand.

## Patentansprüche

1. Vorrichtung zum Transportieren von flächigen Produkten (28), die zumindest über einen Abschnitt eine Kante (32) aufweisen, mit einer Unterdruckeinheit (12, 122, 172), die an einer Unterseite (123, 173) eine längs verlaufende Ansaugöffnung (14, 124, 174) aufweist, durch die Luft über eine Unterdruckquelle (17, 127) ansaugbar ist, wobei eine Reihe (158) von zu transportierenden flächigen Produkten (28) mittels eines durch Unterdruck erzeugten Sogeffekts über deren eine Kante (32) an die Unterseite (123, 173) anhängbar sind, und wobei die Kante (32) beim Transport an der längs verlaufenden Ansaugöffnung (14, 124, 174) anliegt und zu dieser quer ausgerichtet ist.

2. Vorrichtung nach Anspruch 1, **dadurch gekennzeichnet, dass** die Unterdruckeinheit (122) mit den anhängenden flächigen Produkten (28) bewegbar ist.

3. Vorrichtung nach Anspruch 2, **dadurch gekennzeichnet, dass** die Unterdruckeinheit (122) mit einer Transporteinheit (139) verbunden ist, durch die die Unterdruckeinheit (122) zumindest von einer ersten Position in eine zweite Position überbringbar ist.

4. Vorrichtung nach einem der Ansprüche 1 bis 3, **dadurch gekennzeichnet, dass** ein wirksamer Ansaugquerschnitt der Ansaugöffnung (124) veränderbar ist.

5. Vorrichtung nach Anspruch 4, **dadurch gekennzeichnet, dass** sie ferner eine verschiebbare Abdeckung (176) aufweist, die Bereiche der Ansaugöffnung (174) abdeckt.

6. Vorrichtung nach Anspruch 5, **dadurch gekennzeichnet, dass** die Unterdruckeinheit (172) eine Saugleiste (175) aufweist, an deren einem Ende ein Sauganschluss (178) vorhanden ist und von deren anderem Ende her die verschiebbare Abdeckung (176) einbringbar ist.

7. Vorrichtung nach einem der Ansprüche 1 bis 4, **dadurch gekennzeichnet, dass** die Unterdruckeinheit (122) eine Teleskopsaugleiste (129) aufweist, durch die die Länge (131) der Ansaugöffnung (124) an der Unterseite (123) veränderbar ist.

8. Vorrichtung nach einem der Ansprüche 4 bis 7, **dadurch gekennzeichnet, dass** die Querschnittsveränderung der Ansaugöffnung (124) durch einen Antrieb (143) regelbar ist.

9. Vorrichtung nach einem der Ansprüche 1 bis 8, **dadurch gekennzeichnet, dass** ein perforierter Transportriemen (18) an der Ansaugöffnung (14) angeordnet ist, der in einer Transportrichtung (20) längs der Längserstreckung der Ansaugöffnung (14) bewegbar ist, so dass die flächigen Produkte (28) über deren Oberkante (32) an dem perforierten Transportriemen (18) hängend transportierbar sind.

10. Vorrichtung nach Anspruch 9, **dadurch gekennzeichnet, dass** die Ansaugöffnung (14) eine Vielzahl an Langlochöffnungen (44, 44') aufweist, entlang derer eine Perforation des Transportriemens (18) läuft.

11. Vorrichtung nach Anspruch 10, **dadurch gekennzeichnet, dass** die Perforation des Transportriemens (18) durch Löcher (66) gebildet ist, die als Reihen (68) von Löchern (66) sich sowohl in Längs- als auch in Querrichtung der Ansaugöffnung (14) erstrecken und mit den Langlochöffnungen (44, 44') kommunizieren.

12. Vorrichtung nach einem der Ansprüche 1 bis 11, **dadurch gekennzeichnet, dass** sie ferner zumindest einen bewegbaren Schieber (76) aufweist, durch den die an der Unterdruckeinheit (12) hängenden flächigen Produkte (28) wegdrückbar sind.

13. Vorrichtung nach Anspruch 12, **dadurch gekennzeichnet, dass** der Schieber (76) mit seitlich über die Unterdruckeinheit (12) vorstehenden Oberkanten (32) der flächigen Produkte (28) in Eingriff bringbar ist und diese nach unten von der Ansaugöffnung (14, 124, 174) wegdrückt.

14. Vorrichtung nach einem der Ansprüche 1 bis 13, **dadurch gekennzeichnet, dass** die Unterdruckeinheit (12, 122, 172) einen Unterbrecher (82) aufweist, über den ein an der Ansaugöffnung angelegte Unterdruck zumindest kurzzeitig unterbrechbar ist.
